Europäisches Patentamt

European Patent Office

Office européen des brevets

(19)

(11) Veröffentlichungsnummer: **0 103 082**
**A2**

(12) **EUROPÄISCHE PATENTANMELDUNG**

(21) Anmeldenummer: 83106000.9

(51) Int. Cl.³: **G 01 N 31/08**

(22) Anmeldetag: 20.06.83

(30) Priorität: 28.06.82 DE 3224495
18.02.83 DE 3306127

(43) Veröffentlichungstag der Anmeldung: 21.03.84
Patentblatt 84/12

(84) Benannte Vertragsstaaten: AT BE CH DE FR GB IT LI LU
NL SE

(71) Anmelder: Schöneshofer, Manfred, Prof. Dr.,
Zähringerstrasse 3a, D-1000 Berlin 31 (DE)
Anmelder: Kage, Andreas, Detmolderstrasse 64,
D-1000 Berlin 31 (DE)

(72) Erfinder: Schöneshofer, Manfred, Prof. Dr.,
Zähringerstrasse 3a, D-1000 Berlin 31 (DE)
Erfinder: Kage, Andreas, Detmolderstrasse 64,
D-1000 Berlin 31 (DE)

(74) Vertreter: Weisert, Annekäte, Dipl.-Ing. Dr.-Ing. et al,
Patentanwälte Dipl.-Chem. Dr. Walter Kraus Dipl.-Ing.
Dr.-Ing. Annekäte Weisert Irmgardstrasse 15,
D-8000 München 71 (DE)

(54) Vollautomatisches Verfahren zur schnellen, spezifischen und selektiven quantitativen Bestimmung von niedrig konzentrierten Substanzen aus stark heterogenen Substanzgemischen, sowie automatisches Säulenchromatographieverfahren zur Anreicherung, Vorreinigung und Konzentrierung von Stoffen aus heterogenen, flüssigen Substanzgemischen.

(57) Das dem Verfahren zugrundeliegende System ist aus einem modular aufgebauten Lösungsmittel-Reinigungs- und -Entgasungssystem, einem hocheffektiven Vorreinigungs- und Derivatisierungssystem, einem anschließenden hochauflösenden Chromatographiesystem und einem abschließenden quantifizierenden Detektorsystem zusammengesetzt. Das Gesamtsystem wird durch eine Prozeßsteuerung synchronisiert, die aus zwei unabhängigen Zeitprogrammen besteht, von denen eines das Vorreinigungssystem und den Start des zweiten Programms steuert, und das zweite das hochauflösende Chromatographiesystem steuert einschließlich der Detektorvorrichtungen.

Die Lösungsmittel-Reinigung und -Entgasung basiert auf zwei, über verschiedene Filter verbundene Flüssigkeitsreservoirs, die gegenüber der Atmosphäre abgeschlossen sind. Die Entgasung erfolgt im Primärreservoir, während die Lösungsmittel in den Sekundärreservoirs in entgaster und gereinigter Form vorliegen.

Im Vorreinigungs- bzw. Derivatisierungssystem wird das den Analysanden enthaltende Substanzgemisch auf eine Säule gegeben. Durch «Vorwärts-Elution» werden interferierende Substanzen eliminiert. Anschließend wird die Analysanden-Fraktion weitgehend selektiv in ein Mischteil

überführt, in dem das Milieu der Analysanden-Fraktion oder der Analysand selbst derart verändert wird, daß der Analysand auf einer nachfolgenden Säule retiniert wird. Nach gegebenenfalls notwendiger «Vorwärts-Elution» interferierender Substanzen von dieser Säule wird die Analysandenfraktion rückwärts eluiert und einem nachgeschalteten hochauflösenden Chromatographiesystem zugeführt. Der Analysand wird durch ein nachgeschaltetes Detektorsystem quantifiziert.

Beim zweiten Verfahren wird ein Analysand aus einem stark heterogenen Substanzgemisch säulenchromatographisch chromatographiert. Dies geschieht dadurch, daß das Substanzgemisch im «Vorwärts-Fluß» auf eine Säule gegeben wird und nach Elution interferierender Substanzen nach vorne herauseluiert wird. Über ein nachgeschaltetes Mischteil ist es möglich, die Analysanden-Fraktion oder den Analysanden selbst zu verändern, damit der Analysand auf der zweiten Säule retiniert wird. Nach weiterer Elution interferierender Substanzen wird die Analysanden-Fraktion, die in einer schmalen Zone retiniert wurde, im «Rückwärts-Fluß» von der zweiten Säule eluiert und einem nachgeschalteten Chromatographie- oder Detektionssystem zugeführt. Eine elektronische Schaltung reduziert den manuellen Einsatz weitgehend und führt zu einer hohen Reproduzierbarkeit.

Automatisches Säulenchromatographieverfahren zur Anreicherung, Vorreinigung und Konzentrierung von Stoffen aus heterogenen, flüssigen Substanzgemischen

Die Erfindung bezieht sich auf ein automatisches Säulenchromatographieverfahren zur Stoffaufarbeitung (Anreicherung, Vorreinigung und Konzentrierung) von Stoffen aus heterogenen, flüssigen Substanzgemischen. Dem Verfahren liegt ein Säulensystem zugrunde, das aus zwei beliebigen, nach beiden Enden hin gegen den Austritt von Füllmaterial abgeschlossenen Säulen, einem Mischteil, einem Ventilsystem, einem Pumpensystem und einem elektronischen Steuersystem besteht. Die Stoffaufarbeitung erfolgt durch geeignete, elektronisch gesteuerte Schaltung des Ventil- und Pumpensystems.

Die Stoffaufarbeitung im Rahmen chromatographischer Nachweisverfahren stellt bei stark heterogenen Substanzgemischen und insbesondere bei Körperflüssigkeiten (z. B. Serum, Urin bei Menschen und Tieren) oder bei sonstigen biologischen Flüssigkeiten (z. B. Gewebsextrakten) eine elementare Notwendigkeit dar, wenn es um den quantitativen Nachweis von niedrig konzentrierten Stoffen geht. Eine direkte Aufgabe von größeren Mengen, die zur quantitativen Erfassung der niedrig konzentrierten Stoffe notwendig wären, auf die zur Zeit effektivsten Chromatographie-Systeme, Gaschromatographie oder High Performance Liquid Chromatography (HPLC), ist nicht möglich (A. Pryde and M.T. Gilbert, Applications of High Performance Liquid Chromatography, Chapman and Hall, London, 1979). Zur Aufarbeitung der Substanzgemische sind daher bislang zeitaufwendige, oft verlustreiche, nicht reproduzierbare und chemisch zersetzende manuelle Operationen erforderlich. Daher sind quantitative Analysen nur unter Berücksichtigung eines internen Standards möglich.

1981 wurde von Roth et al. (J. Chromat., 222 (1981) 13 - 22) ein automatisches Aufarbeitungsverfahren vorgestellt, das im Prinzip eine automatische Stoffaufarbeitung ermöglicht. Körperflüssigkeiten, z. B. Urin, werden dabei durch eine kleine, 'reversed-phase'- -Vorsäule gepumpt, wobei die zu analysierenden Substanzen auf der Säulenmatrix festgehalten werden. Polare, interferierende Substanzen werden im 'Rückwärts-Fluß'-Verfahren dann von dieser Säule auf eine analytische Säule eluiert und dort mit HPLC aufgetrennt. Dieses Verfahren ist primär für den Nachweis von relativ hochkonzentrierten Pharmaka in Körperflüssigkeiten konzipiert. Die Nachteile dieses Verfahrens, insbesondere der Nachweis niedrigkonzentrierter Stoffe, sehen wie folgt aus:

1. Alle unpolaren Substanzen - bei Serum z. B. auch beträchtliche Mengen an Eiweißen - werden bei diesem 'Rückwärts-Fluß'-Verfahren auf den Kopf der analytischen Säule gespült und hier kumulativ retiniert. Bei größeren Probenvolumina wird die analytische Säule somit zwangsläufig schnell kontaminiert und unbrauchbar.

2. Eine prinzipiell mögliche 'Vorwärts-Fluß'-Technik vermeidet die unter 1. aufgezeigten Nachteile, hat jedoch einen erheblichen Verlust der Trennschärfe auf der analytischen Säule zur Folge.

3. Die Anreicherungskapazität bei sehr großen Volumina

- 3 -

ist auf eine Vorsäule beschränkt.

Die Einzelschritte des zu patentierenden Verfahrens
sehen wie folgt aus:

a) Die quantitativ zu bestimmende Substanz (Analysand)
wird auf einer Säule (C1) retiniert und störende
Substanzen bereits ausgespült.

b) Durch beliebige Variation weiterer Elutionsmittel
erfolgt eine weitere Vorreinigung auf der ersten
Säule. Der Analysand wird auf der Säule festgehalten.

c) Mit einem geeigneten Elutionsmittel wird der
Analysand im 'Vorwärts-Fluß' von der ersten Säule
eluiert.

d) Das Elutionsmilieu der Analysanden-Fraktion oder
der Analysand selbst wird anschließend in dem Mischteil (M) derart verändert, daß der Analysand oder
sein Derivat in einer schmalen Zone auf einer
zweiten Säule (C2) retiniert wird.

e) Durch weitere Elutionsmittel kann die Analysanden-
-Fraktion auf der zweiten Säule nochmals gereinigt
werden.

f) Die Analysanden-Fraktion wird anschließend im
'Rückwärts-Fluß'-Verfahren eluiert und ist dann einer
weiteren Chromatographierung oder Quantifizierung
zugänglich.

g) Durch Ventilschaltung (V1) ist es weiterhin möglich, im 'Rückwärts-Fluß'-Verfahren Substanzen von
der Säule (C1) zu waschen, die nicht säulengängig
sind oder noch auf der Säule festgehalten werden.

h) Ein elektronisches Zeitrelais erlaubt die vollautomatische Steuerung der einzelnen Teilsysteme,
wie Ventile und Pumpen.

Die wesentlichen Vorteile des zu patentierenden
Verfahrens gegenüber den bisherigen liegen darin,
daß

1. der Analysand in konzentrierter, stark vorgereinigter und scharf fokussierter Form von der zweiten
Säule (C2) eluiert wird und auf einer analytischen
Säule chromatographiert werden kann, ohne diese mit
Ballaststoffen zu kontaminieren; damit wird die
Kapazität der analytischen Säule effektiver genutzt.

2. Durch die selektive Elution der Analysanden-
-Fraktion von der ersten Säule (C1) im 'Vorwärts-
-Fluß' gelangen nur säulengängige Substanzen auf die
zweite Säule (C2) und damit auf eine nachgeschaltete
analytische Säule. Im Gegensatz zu dem von Roth et
al. vorgestellten Verfahren können damit weitaus
größere Volumina von Substanzgemischen, wie z. B.
Serum, problemlos bearbeitet werden, da die analytische Säule nicht von großen, nicht säulengängigen
Eiweißen im 'Rückwärts-Fluß' verstopft wird.

3. Die erste Säule (C1) kann, z. B. bei sehr großen
Flüssigkeitsmengen, mehrfach be- und entladen werden,
und diese auf der zweiten Säule (C2) gesammelten
Fraktionen können in Form einer einzelnen Fraktion
von der zweiten Säule eluiert und quantifiziert
werden.

4. Das Verfahren operiert im Gegensatz zum Verfahren
von Roth et al. unabhängig von einem HPLC und damit
ist das zu patentierende Verfahren auch für andere
Analyse- und Quantifizierungstechniken geeignet.

5. Die Möglichkeit der Derivatisierung des Analysanden und der nachfolgenden Chromatographie bedeuten
eine Erweiterung der potentiellen Quantifizierungs-

- 5 -

techniken (z. B. Fluorometrie) bei automatischer
Stoffaufarbeitung.

Gegenüber der manuellen Aufarbeitung ergeben sich
folgende Vorteile

6. Eine Möglichkeit zur Automatisation von der Probennahme bis zur Detektion macht einen manuellen Einsatz
weitgehend unnötig und erhöht die Reproduzierbarkeit.

7. Aufgrund der hohen Reproduzierbarkeit und verlustfreien Aufarbeitung, die durch vollständige Elution
des Analysanden von den Chromatographiesäulen bedingt
ist, wird die Eichung der quantitativen Bestimmung
durch externe Standards möglich.

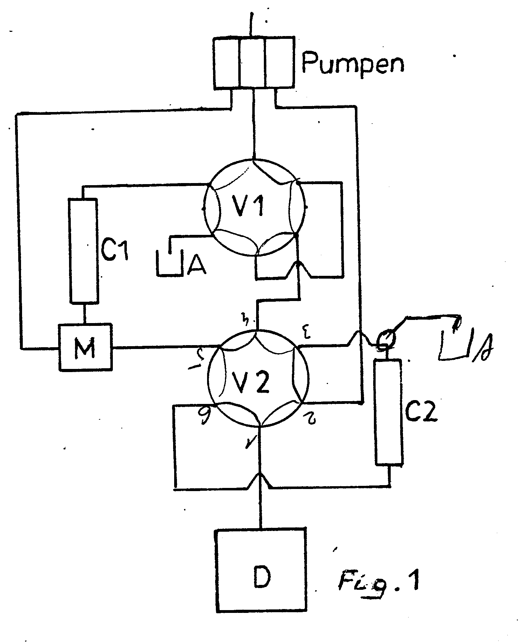

Die Abbildung 1 zeigt die Skizze eines möglichen
Säulensystems zur Durchführung des zu patentierenden
Verfahrens. Es besteht aus einem Mischteil (M), einem
Abfallgefäß, einem Pumpensystem, zwei Chromatographiesäulen (C1 und C2) und zwei Ventilen (V1 und V2), die
eine mögliche Schaltung darstellen. Am Auslauf wird
durch (D) ein beliebiges Chromatographie- oder Quantifizierungsverfahren angedeutet.

Am Beispiel der spezifischen Bestimmung des Cortisol
aus menschlichem Serum soll das System erläutert
werden:
Es werden hierbei Chromatographiesäulen, beide mit
'reversed-phase'-Material (ODS, 5 $\mu$m Ø) gefüllt,
verwendet. Bei der Durchführung wird über einen automatischen Probennehmer 1 ml einer Serumprobe angesaugt und durch eine Pumpe über das Ventil V1 auf
die Säule C1 gegeben. Durch Elution mit methanolischer
HCl und NaOH werden polare Substanzen, lipophile

- 6 -

Säuren und Basen von der Säule C1 in das Abfallgefäß A eluiert. Die Cortisolfraktion wird relativ selektiv mit Acetonitril/$H_2O$ von der Säule C1 eluiert. Im Mischteil M wird dem Eluat $H_2O$ im Verhältnis 2:1 zugeführt, so daß die Stercidfraktion, die durch die geeignete Stellung von Ventil V2 auf die Säule C2 gelangt und dort auf dem Kopf der Säule retiniert wird. Durch Umschalten von Ventil V2 wird die Säule C2 im 'Rückwärts-Fluß' eluiert, und die eluierte Cortisol-Fraktion wird über einer analytischen HPLC-Säule scharf aufgetrennt und durch UV-Absorption quantifiziert. Durch die 1oo %ige Wiederauffindung wird zur Eichung nur ein externer Standard benötigt. Nach dem Laden der Säule C2 und Schalten des Ventils V2 zur 'Rückwärts-Fluß'-Elution der Säule C2 wird die Säule C1 im Rückwärts-Fluß' mit Acetonitril gewaschen und mit $H_2O$ regeneriert.

-7-

Die Erfindung bezieht sich auf ein vollautomatisches Verfahren zur schnellen, spezifischen und selektiven quantitativen Bestimmung niedrig konzentrierter Substanzen aus stark heterogenen Substanzgemischen auf chromatographischer Basis. Das dem Verfahren zugrunde liegende System besteht im einzelnen aus einem modular erweiterbaren Lösungsmittel-Entgasungs- und -Reinigungssystem, mindestens einem hocheffektiven Vorreinigungs- und Derivatisierungssystem auf flüssigkeitschromatographischer Basis, mindestens einem hochauflösenden Chromatographieschritt und einem abschließenden Quantifizierungssystem. Der gesamte Verfahrensablauf wird mit einem elektronischen Prozeßsteuersystem synchronisiert.

Im Bereich der klinischen Chemie wurden in der letzten Zeit vollautomatische Analysegeräte eingeführt, die es ermöglichen, selektiv beliebige Substanzen (Analysanden) zu quantifizieren, unabhängig von der Art und Reihenfolge der zu quantifizierenden Analysanden. Die Auswahl dieser Analysanden beschränkt sich jedoch überwiegend auf solche, die aufgrund ihrer Konzentration photometrischen Verfahren zugänglich sind.

Für niedriger konzentrierte Substanzen werden zur Zeit Verfahren angewandt und kommerziell angeboten, die auf immunologischen Techniken
basieren und die dadurch eine deutliche Empfindlichkeitsverbesserung erreichen. Die Spezifität
dieser Quantifizierungstechniken hängt jedoch
sehr stark von der Spezifität der verwendeten
Antiseren ab. Dadurch ist die analytische Qualität
dieser quantitativen Methoden durch das
grundsätzliche Problem der Kreuzreaktivitäten
eingeschränkt, insbesondere dann, wenn auf
leistungsfähige Vorextraktionsverfahren verzichtet wird.

Weitaus spezifischer sind quantitative Analysen
mit Hilfe der Hochdruckflüssigkeitschromatographie (HPLC) oder der Gaschromatographie (GC).
Für beide Methoden ist bei der quantitativen
Analyse niedrig konzentrierter Substanzen aus
stark heterogenen Substanzgemischen, wie sie
insbesondere bei biologischen Flüssigkeiten, z.B.
menschlichem Serum, Urin oder Gewebsextrakten,
vorliegen, eine Vorextraktion eine elementare
Notwendigkeit. Eine direkte Aufgabe von größeren
Materialmengen ist ebenfalls nicht möglich.
Zur Aufarbeitung der Substanzgemische sind daher
bislang zeitaufwendige, oft verlustreiche, nicht
reproduzierbare und chemisch zersetzende manuelle
Operationen erforderlich, die häufig speziell
für einen bestimmten Analysanden konzipiert und
daher nicht in einfacher Weise auf andere Analysanden übertragbar sind. Damit ist eine schnelle
und selektive quantitative Bestimmung von Analy-

- 9

sanden aus heterogenen Substanzgemsichen nicht
möglich.

Von M. Schöneshöfer wurde Mitte 1982 ein Verfahren zum Patent angemeldet, das es ermöglicht,
weitgehend selektiv einen Analysanden aus einem
stark heterogenen Substanzgemisch zu extrahieren
und ggf. zu derivatisieren. Dieses automatisierbare
Verfahren und ein in Anlehnung an ein von A. Kage
angemeldetes Lösungsmittel-Entgasungs-
und Reinigungsverfahren vereinfachtes Verfahren
bilden die Grundlage des zu patentierenden Verfahrens zur vollautomatischen, schnellen, spezifischen und selektiven quantitativen Bestimmung
von niedrig konzentrierten Substanzen aus stark
heterogenen Substanzgemischen.
Die unübersehbaren Vorteile beider Verfahren
wurden zusammengefaßt, durch Erweiterungen
flexibler gemacht und an der unzulänglichen Stellen ergänzt. Daneben wird ein Prozeßsteuersystem
zur Synchronisation verwendet.

Das zu patentierende Verfahren sieht folgendermaßen aus:

Es besteht aus einem modular erweiterbaren Lösungsmittel-Entgasungs- und -Reinigungssystem,
einem hocheffektiven Vorreinigungs- und ggf.
Derivatisierungssystem und mindestens einem
hochauflösenden Chromatographieschritt mit einem
anschließenden quantifizierenden Detektorsystem,
die alle mit einer elektronischen Prozeßsteuereinheit synchronisiert, gesteurt und überwacht

0103082

— 16

werden.

Die Grundeinheit des Lösungsmittel-Reinigungs-
und -Entgasungssystems besteht aus einem Primärreservoir, das gegenüber der Atmosphäre dicht
abgeschlossen ist und neben einer Ableitung für
das im Primärreservoir enthaltene Lösungsmittel
eine Gaszuleitung aus einer Gasdruckanlage (Pumpe, Druckgasflasche o.ä.), die ein in dem
Lösungsmittel schlecht lösliches und chemisch
weitgehend inertes Gas fördert, und eine Zuleitung zu einer Vakuumpumpe aufweist, und einem
Sekundärreservoir, das ebenfalls gegenüber der
Atmosphäre dicht abgeschlossen ist. Die Ableitung
des in dem Primärreservoir enthaltenen Lösungsmittels führt über mechanische Filter mit ausreichend kleinen Poren und Säulen mit geeigneten
chemischen Adsorptionsmeterialien zur Reinigung
des Lösungsmittels zu einem Sekundärreservoir.
Der Verfahrensablauf zur Entgasung und Reinigung
der Lösungsmittel sieht folgendermaßen aus:
a.a. Über die Vakuumpumpe wird anfänglich ein
     subathmosphärischer Druck im Primärreservoir erzeugt, der zusammen mit der Erwärmung des enthaltenen Lösungsmittels
     zu einer Entgasung führt.
Ein Rückfluß von Lösungsmittel wird durch ein
Rückschlagventil oder ein anderes Ventil verhindert.
a.b. Nach ausreichender Entgasung wird die
     Verbindung zur Vakuumpumpe unterbrochen

– 11

und es erfolgt ein Druckausgleich durch Zuleiten von Gas aus der Gasdruckanlage. Hierdurch wird ein leicht über dem atmosphärischen Druck liegendes Druckniveau im Primärreservoir erzeugt, so daß das jeweilige Lösungsmittel bis zum Druckausgleich zwischen Primär- und Sekundärreservoir langsam über die Ableitung des Primärreservoirs und die mechanischen Filter und chemischen Reinigungssäulen in das Sekundärreservoir fließen.

a.c. Das so aufgearbeitete Lösungsmittel ist nun jederzeit aus dem Sekundärreservoir abrufbar.

Der in den Sekundärreservoirs herrschende Druck richtet sich nach der Druckfestigkeit der den Sekundärreservoirs nachgeschalteten Ventilsysteme und den Eigenschaften der Pumpen. Während die Primärreservoirs so groß wie möglich sind, um ein häufiges Nachfüllen der Lösungsmittel zu vermeiden, sind die Dimensionen der Sekundärreservoirs möglichst klein gehalten, so daß einerseits ein längeres Verbleiben der Lösungsmittel in den Sekundärreservoirs vermieden wird, andererseits das einzelne Sekundärreservoir noch groß genug ist, um bei maximaler Entnahmegeschwindigkeit der angeschlossenen Pumpen über eine begrenzte Zeit die geringe Flußkapazität der Verbindung von Primär- zum Sekundärreservoir aufgrund des notwendigerweise nur leichten Überdruckes überbrücken zu können. Ein Unterdruck ist

- 12

auf jeden Fall zu vermeiden, da durch die Saugwirkung der Pumpen ansonsten durch in den Lösungsmitteln gelöste Gase oder durch niedrig siedende
Lösungsmittel Gasblasen entstehen, die eine Störung der Detektorsignale oder eine Verminderung
oder einen Ausfall der Pumpleistung der einzelnen
Pumpen bewirken.

Aus den einzelnen Sekundärreservoirs führen Lösungsmittel-leitende Verbindungen direkt zu den
Eingängen verschiedener Mehrfach-Wege-Ventile
( = Ventile mit mehreren Eingängen und einem Ausgang, bei denen jeweils eine leitende Verbindung
zwischen einem der verschiedenen Eingänge und dem
Ausgang variiert werden kann), von denen jeweils
die Ausgänge mindestens zweier Ventile zu den im
System vorhandenen Pumpen (P11, P12, P13, P14,
P21, P31 in Skizze 2) führen. Für jedes einzelne
Lösungsmittel ist lediglich ein Primär- und ein
Sekundärreservoir erforderlich.

Ein weiteres Ventilsystem (V11, V12, V13, V21,
V31 in Skizze 2), das jeweils einen Ausgang zweier
oder mehr Mehrfach-Wege-Ventile (MV11 - MV18, MV21
und MV22 in Skizze 2) über eine Mischkammer mit
den einzelnen Ansaugventilen der Pumpen verbindet,
ist mit einer Zeitsteuerung variabel zu betätigen.
Damit ist in Abhängigkeit von den Öffnungszeiten dieses Ventilsystems für das jeweilige
Lösungsmittel ein vorgegebenes Mischungsverhältnis zu erreichen. Die Dauer eines dieser Zyklen ist an der Mischungskapazität der Mischkammern
orientiert und beträgt ca. 2 - 3 sec. Je nach der

-13

Anzahl der Eingänge der Mehrfach-Wege-Ventile ist die Anzahl der unterschiedlichen Lösungsmittel variierbar; es müssen lediglich je Lösungsmittel ein Primärreservoir und ein Sekundärreservoir einschließlich des Filtersystems ergänzt werden.

Skizze 1 zeigt schematisch den Aufbau eines verwendeten Lösungsmittel-Reinigungs- und -Entgasungsmoduls. Dabei stellt (DG) die Druckgasanlage, (VP) die Vakuumpumpe, (PR) das Primärreservoir, (SR) das Sekundärreservoir, (R) ein Rückschlagventil und (F) das mechanische und chemische Filter-Säulen-System dar. (MV..) ist eines der Mehrfach-Wege--Ventile und (H) eine regulierbare Heizplatte.

Ein Schema einer möglichen Schaltung des Vorreinigungs- und Derivatisierungssystems ist in Skizze 2 dargestellt. Sie gewährleistet folgenden Verfahrensablauf:

b.a. Mittels der Pumpe (P1) wird das heterogene Substanzgemisch zusammen mit dem Analysanden auf die Säule (C1) geladen.

b.b. Während dieser Zeit wird das hochauflösende Chromatographiesystem (CS3) für die Chromatographie dieses Analysanden vorbereitet. Dieser Schritt erfordert je nach der Art der Chromatographie (HPLC oder GC oder eine Kombination beider) unterschiedliches Vorgehen.

b.c. Mit der Pumpe (P1) werden interferierende Substanzen durch geeignete Elutionsmittel im 'Vorwärts-Fluß' von der Säule (C1) eluiert und verworfen.

-14

b.d. Der Analysand wird anschließend weitgehend selektiv eluiert.

b.a. Im Mischteil (M) wird das Elutionsmilieu der Analysanden-Fraktion oder ggf. der Analysand selbst derart verändert, daß er oder sein Derivat auf der Säule (C2) retiniert wird.

Die Frage, ob und wie der Analysand derivatisiert wird, hängt von den Bedingungen des hochauflösenden Chromatographiesystems (GC) und des verwendeten Detektorsystems ab.

b.f. Durch geeignete Ventilstellung können weitere interfeirerende Substanzen (z.B. auch Substrate oder unerwünschte Reaktionsprodukte) von der Säule (C2) eluiert und verworfen werden.

b.g. Danach wird die Säule (C2) mit der Analysanden-Fraktion durch Schalten des Ventils (V2) rückwärts in den Strom von der Pumpe (P3) zum Chromatographiesystem (C3S) eingeschaltet.

Die Analysanden-Fraktion wird damit in weitgehend gereinigter und ggf. derivatisierter Form auf das hochauflösende Chromatographiesystem (C3S) überführt, wobei dieses System aus einer HPLC, einer GC oder einer Kombination beider Verfahren besteht.

b.h. Die Analysanden-Fraktion wird über dem hochauflösenden Chromatographiesystem (C3S) chromatographiert.

b.i. Sofort nach dem Schalten des Ventils (V2) (b.g.) wird durch Schalten des Ventils (V1) die Säule (C1) im 'Rückwärts-Fluß' von Lösungsmitteln durchströmt und dadurch von noch retinierten Resten des heterogenen Substanzgemisches gereinigt und für den nachfolgenden

- 15

Chromatographielauf aktiviert.

b.j. Die inzwischen über dem System (C3S) chromatographierte Analysanden-Fraktion wird einem quantifizierenden Detektionssystem zugeführt.

Als Detektionssysteme kommen UV-Photometer, Fluorimeter, chemische oder elektrochemische Detektoren, immunologische Techniken, Massenspektrometrie o.ä. in Frage.

Für eine Derivatisierung des Analysanden ist eine Temperierung des Mischteils (M) gewährleistet und eine Veränderbarkeit der Länge der Reaktionsstrecke vorgesehen. Über die Pumpen (P3) und (P4) ist ein Stoppen oder Verändern der Derivatisierungsreaktion möglich. Sind weitere Reaktionsschritte erforderlich, so ist das Mischteil (M) entsprechend zu erweitern; Skizze 2 zeigt nur eine mögliche Schaltung des Vorreinigungs- und Derivatisierungssystems.

Für den Fall, daß die chromatographischen Eigenschaften der Säulen (C1) oder (C2) nicht geeignet sind, den jeweiligen Analysanden in ausreichendem Maße zu retinieren, ist es über die Ventilsysteme (CV1) und (CV2) möglich, die betreffende Säule durch eine andere, retentionsfähigere auszutauschen.

Der gesamte Verfahrensablauf wird von zwei unabhängig voneinander arbeitenden Zeitprogrammen gesteuert, wobei Programm 1 die Verfahrensschritte b.a., b.c. - b.f. und b.h. steuert und Programm 2 die Verfahrensschritte b.b., b.g. und b.i. einschließlich der Sollwerte für die jeweils geeig-

16

nete Detektoreinrichtung und des Ventils (DV),
das die endgültig chromatographierte Analysanden-
Fraktion dorthin dirigiert. Die Verfahrensschritte a.a. - a.c. der Lösungsmittel-Entgasungs- und -Reinigungssystems werden unabhängig von den beiden Hauptsteuerprogrammen von einem nebengeordneten Prozeßüberwachungssystem kontrolliert; die Programme 1 und 2 steuern lediglich die Positionen der Mehrfach-Wege-Ventile, die die Zuleitung der einzelnen Lösungsmittel zu den Pumpen (P1) - (P4) regeln.

Die Verknüpfung beider Programme erfolgt durch Programm 1 derart, daß Programm 1, das spezifisch für einen oder eine Gruppe von Analysanden ist, ein Programm 2 so startet, daß zur Aktion b.g. die Aktivierung oder Auswahl des hochauflösenden Chromatographiesystems abgeschlossen ist (Schritt b.b.).

Ein nebengeordnetes Prozeßüberwachungssystem kontrolliert neben dem Lösungsmittel-Entgasungs- und -Reinigungssystem die Ist-Werte einer Vielzahl von Parametern, deren Soll-Werte von den Programmen 1 und 2 vorgegeben werden, wie z.B. Temperatur der Säuleninnenräume und der Lösungsmittel, Druck und Fluß sowie die Einhaltung des vorgegebenen Mischungsverhältnisses der Lösungsmittel am Eingang der einzelnen Pumpen.
In dem in Skizze 2 dargestellten Schaltungsbeispiel steuert dieses Überwachungssystem weiterhin die Aktionen eines automatischen Probennehmers, dessen Startimpuls durch das Programm 1

- 17 -

gegeben wird und der dem gesamten System die einzelnen Proben, bestehend aus heterogenem Substanzgemisch und Analysand, zuführt. Durch eine Ventilschaltung (V3) wird die Probe in das chromatographische System hinter der Pumpe (P1) eingeschaltet und,
nachdem die Probe aus der eingeschalteten Schleife
herausgewaschen wurde, wird die Schleife wieder aus
dem chromatographischen System herausgenommen und
mit einer neuen Probe geladen, nachdem mit einem
geeigneten Lösungsmittel der Inhalt der Probenschleife entfernt worden ist. Die Länge der Probenschleife
bestimmt die dem System zugeführte Probenmenge.

Die Vorteile dieses Verfahrens leigen im Gegensatz
zu dem von A. Kage zum Patent angemeldeten Verfahren
darin, daß ein Lösungsmittelverlust, der durch das
notwendige Reinigen der Filtereinheit entsteht,
vermieden wird, da für jedes Lösungsmittel neben
einem Primärreservoir und einem Sekundärreservoir
eine Filtereinheit zur Verfügung steht.
Im Vergleich zu dem von M. Schöneshöfer angemeldeten Verfahren stellt das hier zu patentierende
Verfahren eine bedeutende Weiterentwicklung dar,
da dieses System nicht nur der einfachen Probenaufarbeitung und -derivatisierung dient, sondern
ein flexibles und leistungsfähiges Verfahren zur
selektiven Analyse der unterschiedlichsten Substanzen darstellt und die Integration der hochdruckflüssigkeitschromatographischen und gaschromatographischen Techniken in die Routine-
Analytik ermöglicht.

*18*

Patentansprüche:

1. Ein Verfahren zur säulenchromatischen Anreicherung, Vorreinigung und Fokussierung einer Substanz aus einer heterogenen, flüssigen Substanzlösung. Dabei ist das Verfahren dadurch gekennzeichnet, daß

a. das heterogene Substanzgemisch mit dem Analysanden auf eine Säule geladen wird, die nach beiden Enden hin gegen Austritt des Füllmaterials geschützt ist,

b. interferierende Substanzen durch geeignete Elutionsmittel im 'Vorwärts-Fluß' von der Säule gewaschen und verworfen werden.

c. Der Analysand anschließend weitgehend selektiv eluiert wird,

d. über ein Mischteil das Elutionsmilieu der Analysanden-Fraktion oder der Analysand selbst derart verändert werden, daß er auf der zweiten Säule retiniert wird.

e. Durch geeignete Ventilschaltung können weitere interferierende Substanzen von der zweiten Säule eluiert und verworfen werden.

f. Der Analysand wird dann im 'Rückwärts-Fluß' von der zweiten Säule eluiert.

g. Nach Elution der Analysanden-Fraktion von der ersten Säule wird diese Säule im 'Rückwärts-Fluß' eluiert und für einen folgenden Lauf aktiviert, soweit dies erforderlich ist.

2. Ein Verfahren nach Anspruch 1, bei dem die notwendigen Ventilschaltungen, die Pumpensteuerung und alle weiteren dem System zugehörigen Teile durch elektronische Zeitrelais gesteuert werden.

3. Ein Verfahren nach Anspruch 1, bei dem der ersten Säule ein beliebig gearteter Probennehmer oder ein

19

anderes, in der Säulenchromatographie verwendetes System vorgeschaltet ist.

4. Ein Verfahren nach Anspruch 1, bei dem der zweiten Säule eine weitere Chromatographiesäule, ein Detektionssystem beliebiger Art, ein quantifizierendes System, ein weiteres System nach Anspruch 1 oder eine Kombination von diesen nachgeschaltet sind.

5. Ein Verfahren nach Anspruch 1, bei dem die Chromatographiesäulen beliebiges Füllmaterial enthalten und selbst aus beliebigem Material bestehen.

0103082

-20

PATENTANSPRÜCHE :

6. Vollautomatisches Verfahren zur schnellen, spezifischen und selektiven quantitativen Bestimmung von niedrig konzentrierten Substanzen aus stark heterogenen Substanzgemischen, das aus einem modular erweiterbaren Lösungsmittel--Entgasungs- und -Reinigungssystem, einem hocheffektiven Vorreinigungs- und ggf. Derivatisierungssystem auf säulenchromatographischer Basis und einem hochauflösenden Chromatographieschritt mit einem anschließenden quantifizierenden Detektorsystem besteht, und mit einer elektronischen Prozeßsteuereinheit synchronisiert und gesteuert wird.

Die Grundeinheit des Lösungsmittel-Reinigungs- und -Entgasungssystems besteht aus einem Primärreservoir, das gegenüber der Atmosphäre dicht abgeschlossen ist und neben einer Ableitung für die im Primärreservoir enthaltenen Lösungsmittel eine Gaszuleitung aus einer Gasdruckanlage, die ein in den Lösungsmitteln schlecht lösliches und chemisch weitgehend inertes Gas fördert, und einer Zuleitung zu einer Vakuumpumpe, und einem Sekundärreservoir. Die Ableitung des in dem Primärreservoir enthaltenen Lösungsmittels führt über mechanische Filter mit ausreichend kleinen Poren und Säulen mit chemischen Adsorptionsmaterialien zur Reinigung der Lösungsmittel zu einem Sekundärreservoir, das ebenfalls dicht von der Atmosphäre abgeschlossen ist.

–21

Der Verfahrensablauf zur Entgasung und Reinigung der Lösungsmittel sieht folgendermaßen aus:

a.a. Über die Vakuumpumpe wird anfänglich ein subatmosphärischer Druck im Primärreservoir erzeugt, der zusammen mit einer Erwärmung des enthaltenen Lösungsmittels zu einer Entgasungs führt.

Ein Rückfluß von Lösungsmittel wird durch geeignete Ventile verhindert.

a.b. Nach ausreichender Entgasung wird die Verbindung zur Vakuumpumpe unterbrochen und es erfolgt ein Druckausgleich durch Zuleiten von Gas aus einer Gasdruckanlage. Hierdurch wird ein leicht über dem atmosphärischen Druck liegendes Druckniveau im Primärreservoir erzeugt, so daß das jeweilige Lösungsmittel bis zum Druckausgleich zwischen Primär- und Sekundärreservoir langsam über die Ableitung des Primärreservoirs und die mechanischen Filter und chemischen Reinigungssäulen in das Sekundärreservoir fließen.

a.c. Das so aufgearbeitete Lösungsmittel ist nun jederzeit aus dem Sekundärreservoir abrufbar.

Aus den einzelnen Sekundärreservoirs führen Lösungsmittel-leitende Verbindungen direkt zu den Eingängen verschiedener Mehrfach-Wege-Ventile, von denen jeweils die Ausgänge mindestens zweier Ventile zu den im System vorhandenen Pumpen führen. Für jedes einzelne Lösungsmittel ist lediglich ein Primär- und ein Sekundärreservoir erforderlich.

_ 22

Ein weiteres Ventilsystem, das jeweils einen Ausgang zweier oder mehr Mehrfach-Wege-Ventile über eine Mischkammer mit den einzelnen Ansaugventilen der Pumpen verbindet, ist mit einer Zeitsteuerung variabel zu betätigen. Damit ist in Abhängigkeit von den Öffnungszeiten dieses Ventilsystems für das jeweilige Lösungsmittel ein vorgegebenes Mischungsverhältnis zu erreichen. Je nach der Anzahl der Eingänge der Mehrfach-Wege-Ventile ist die Anzahl der unterschiedlichen Lösungsmittel variierbar; es müssen lediglich je Lösungsmittel ein Primär- und ein Sekundärreservoir einschließlich eines geeigneten Filtersystems ergänzt werden.

Der prinzipielle Ablauf des Vorreinigungs- und Derivatisierungsverfahrens erfolgt folgendermaßen:

b.a. Mittels einer Pumpe, die die benötigten Lösungsmittel über die Ausgänge mindestens zweier Mehrfach-Wege-Ventile aus den Sekundärreservoirs erhält, deren Mischungsverhältnis über das den Ansaugventilen vorgeschaltete Ventilsystem reguliert wird, wird ein heterogenes Substanzgemisch zusammen mit dem Analysanden auf eine Säule geladen.

b.b. Das hochauflösende Chromatographiesystem wird für die Chromatographie sieses Analysanden vorbereitet. Dieser Schritt erfordert je nach Art der Chromatographie (HPLC oder GC oder einer Kombination beider) ein unterschiedliches Vorgehen.

- 23

b.c. Mit der Pumpe, die den Analysanden auf die Säule geladen hat, werden interferierende Substanzen durch geeignete Elutionsmittel im 'Vorwärts-Fluß' von der Säule eluiert und verworfen.

b.d. Der Analysand wird anschließend weitgehend selektiv eluiert und in ein Mischteil überführt.

b.e. In diesem Mischteil wird das Elutionsmilieu der Analysanden-Fraktion oder ggf. der Analysand selbst derart verändert, daß er oder sein Derivat auf einer zweiten Säule retiniert wird.

b.f. Durch geeignete Ventilschaltung können weitere interferierende Substanzen von der zweiten Säule eluiert und verworfen werden.

b.g. Danach wird die zweite Säule mit der Analysanden-Fraktion durch Ventilschaltung rückwärts in den Strom, der zum hochauflösenden Chromatographiesystem führt, eingeschaltet.

b.h. Die Analysanden-Fraktion wird über dem hochauflösenden Chromatographiesystem chromatographiert. Dieses hochauflösende Chromatographiesystem kann entweder aus einer HPLC oder einer GC bestehen. Auch eine Kombination beider ist in der Weise möglich, daß die Analysanden-Fraktion zuerst mit der HPLC aufgetrennt wird und anschließend durch eine Ventilschaltung die den Analysanden nahezu

- 24 -

rein enthaltene Fraktion noch einmal gaschromatographisch aufgetrennt wird.

b.i. Sofort nach dem Schalten der die Analysanden-Fraktion enthaltenen Säule rückwärts
in den Fluß zum hochauflösenden Chromatographiesystem wird durch Schalten eines
Ventils die erste Säule im 'Rückwärts-Fluß'
von Lösungsmitteln durchströmt und damit
von noch retinierten Resten des heterogenen
Substanzgemisches gereinigt und für den
nachfolgenden Chromatographielauf aktiviert.
Alternativ kann eine andere Säule in den
Lösungsmittelstrom eingeschaltet werden.

b.j. Die über dem hochauflösenden Chromatographiesystem chromatographierte Analysanden-Fraktion
wird einem quantifizierenden Detektorsystem
zugeführt. Als Systeme kommen UV-Photome ter,
Fluorimeter, chemische oder elektrochemische
Detektoren, immunologische Techniken, Massenspektrometrie o.ä. in Frage.

Für den Fall, daß die chromatographischen Eigenschaften der Säulen im Vorreinigungs- und Derivatisierungssystem nicht geeignet sind, den jeweiligen Analysanden in ausreichendem Maße zu
retinieren, ist es über ein Ventilsystem möglich,
die Säule durch andere, retentionsfähigere auszutauschen.

Der gesamte Verfahrensablauf wird von zwei unabhängig voneinander arbeitenden Zeitprogrammen gesteuert, wobei Programm 1 die Verfahrensschritte

- 25 -

b.a., b.c. - b.f. und b.h. steuert und Programm2 die Verfahrensschritte b.b., b.g. und b.i. einschließlich der Sollwerte für die jeweils geeignete Detektoreinrichtung und der Aktionen des Ventils, das die endgültig chromatographierte Analysanden-Fraktion dorthin dirigiert. Die Verfahrensschritte a.a. - a.c. des Lösungsmittel-Entgasungs- und -Reinigungssystems werden unabhängig von den beiden Hauptrpogrammen von einem nebengeordneten Prozeßüberwachungssystem kontrolliert; die Programme 1 und 2 steuern hier lediglich die Positionen der Mehrfach-Wege-Ventile und damit die Art der Lösungsmittel, die von den Pumpen gefördert werden.

Die Verknüpfung beider Programme erfolgt durch Programm 1 derart, daß Programm 1, das spezifisch für einen oder eine Gruppe von Analysanden ist, ein Programm 2 so startet, daß zur Aktion b.g. die Aktivierung oder Auswahl des hochauflösenden Chromatographiesystems abgeschlossen ist (Schritt b.b.).

Ein neben geordnetes Prozeßüberwachungssystem kontrolliert neben dem Lösungsmittel-Entgasungs- und -Reinigungssystem die Ist-Werte einer Vielzahl von Parametern, deren Soll-Werte von den Programmen 1 und 2 vorgegeben werden, wie z.B. Temperatur der Säuleninnenräume und der Lösungsmittel, Druck und Fluß sowie die Einhaltung des vorgegebenen Mischungsverhältnisses der Lösungsmittel am Eingang der einzelnen Pumpen.

26

7. Ein Verfahren nach Anspruch 1, bei dem das Vorreinigungs- und Derivatisierungsverfahren folgendermaßen erweitert wird:
b.a. - b.f. wie in Anspruch 1
Nun wird nicht die Analysanden-Fraktion rückwärts dem hochauflösenden Chromatographiesystem zugeführt, sondern die Analysanden-Fraktion durch geeignete Ventilschaltung vorwärts oder rückwärts eluiert und einem weiteren Mischteil zugeführt. In diesem Mischteil kann der Analysand selbst oder sein Milieu wieder derart geändert werden, daß der Analysand oder sein Derivat auf einer weiteren Säule retiniert wird. Interferierende Substanzen werden eluiert und verworfen. Dieser Vorgang kann beliebig oft wiederholt werden. Den Abschluß des Vorreinigungs- und Derivatisierungsverfahrens bilden wie in Anspruch 1 die Schritte b.g. - b.j. Die Steuerung der eingefügten Schritte erfolgt über Programm 1, die Steuerung der übrigen Schritte erfolgt wie in Anspruch 1.

8. Ein Verfahren nach Anspruch 1, bei dem die Zuleitung des den Analysanden enthaltenen heterogenen Substanzgemisches auf eine andere als die in Anspruch 1 beschriebene erfolgt, z.B. indem sie von der Pumpe 1 angesaugt wird oder mit Hilfe eines Injektors in das System injiziert, da dies für das gesamte Verfahren unerheblich ist. Es muß lediglich eine exakte Volumenkontrolle erfolgen.

-27

9. Ein Verfahren nach Anspruch 1, bei dem die Förderung der Lösungsmittel von den Primärreservoirs zum Sekundärreservoir nicht über einen Überdruck im Primärreservoir erfolgt, sondern durch irgendeine Art von Flüssigkeitspumpen.

10. Ein Verfahren nach Anspruch 1, bei dem die Prozeßsteuerung nicht durch 2 weitgehend unabhängige Programme gesteurt werden, sondern durch ein Programm, in das beide Programme integriert sind, oder durch mehr als zwei Programme, in die die Prozeßsteuer——aufgaben aufgeteilt sind.

11. Ein Verfahren nach Anspruch 1, bei dem die Programme 1 und 2 auf Datenträgern irgendwelcher Art gespeichert und abrufbar sind. Dies kann durch eine externe Ansteuerung oder durch ein implantiertes Programm, das die Reihenfolge der Programme 1 und ggf. 2 vorgibt, erfolgen.

12. Ein Verfahren nach Anspruch 1, bei dem eines oder mehrere Mischteile, die im Vorreinigungs- und Derivatisierungssystem Verwendung finden, aus zwei oder mehr Zuleitungen besteht, zwischen denen jeweils eine Reaktionsstrecke vorgegeben ist. Durch ein Ventilsystem können diese Mischteile je nach Bedarf untereinander ausgetauscht werden.

13. Ein Verfahren, das aus einer beliebigen Kombination der unter 1 - 7 beschriebenen Patenansprüche besteht.

0103082

- 28 -

13. Ein Verfahren nach Anspruch 1, bei dem die Förderung der Lösungsmittel von den Primärreservoirs zum Sekundärreservoir nicht über einen Überdruck im Primärreservoir erfolgt, sondern durch irgendeine Art von Flüssigkeitspumpen.

14. Ein Verfahren nach Anspruch 1, bei dem die Prozeßsteuerung nicht durch 2 weitgehend unabhängige Programme gesteurt werden, sondern durch ein Programm, in das beide Programme integriert sind, oder durch mehr als zwei Programme, in die die Prozeßsteuer——aufgaben aufgeteilt sind.

15. Ein Verfahren nach Anspruch 1, bei dem die Programme 1 und 2 auf Datenträgern irgendwelcher Art gespeichert und abrufbar sind. Dies kann durch eine externe Ansteuerung oder durch ein implantiertes Programm, das die Reihenfolge der Programme 1 und ggf. 2 vorgibt, erfolgen.

16. Ein Verfahren nach Anspruch 1, bei dem eines oder mehrere Mischteile, die im Vorreinigungs- und Derivatisierungssystem Verwendung finden, aus zwei oder mehr Zuleitungen besteht, zwischen denen jeweils eine Reaktionsstrecke vorgegeben ist. Durch ein Ventilsystem können diese Mischteile je nach Bedarf untereinander ausgetauscht werden.

17. Ein Verfahren, das aus einer beliebigen Kombination der unter 1 - 6 beschriebenen Patenansprüche besteht.

0103082

1/1

Pumpen

V 1

C1

A

M

V 2

C2

D

Fig.1